(19) 

Europäisches
Patentamt
European
Patent Office
Office européen
des brevets

(11) **EP 4 501 497 A1**

(12) **EUROPEAN PATENT APPLICATION**
published in accordance with Art. 153(4) EPC

(43) Date of publication:
**05.02.2025 Bulletin 2025/06**

(21) Application number: **23780307.7**

(22) Date of filing: **27.03.2023**

(51) International Patent Classification (IPC):
**B22F 1/18** *(2022.01)*  **B22F 9/00** *(2006.01)*
**B82Y 30/00** *(2011.01)*  **B82Y 40/00** *(2011.01)*

(52) Cooperative Patent Classification (CPC):
**B22F 1/18; B22F 9/00; B82Y 30/00; B82Y 40/00**

(86) International application number:
**PCT/JP2023/012121**

(87) International publication number:
**WO 2023/190297 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.03.2022 JP 2022052218**

(71) Applicant: **Kyocera Corporation
Kyoto-shi, Kyoto 612-8501 (JP)**

(72) Inventor: **FUJIWARA Masakazu
Kyoto-shi, Kyoto 612-8501 (JP)**

(74) Representative: **Viering, Jentschura & Partner
mbB
Patent- und Rechtsanwälte
Am Brauhaus 8
01099 Dresden (DE)**

(54) **NOVEL COMPOSITE MATERIAL, AND METHOD FOR MANUFACTURING COMPOSITE MATERIAL**

(57) Provided is a composite material including: a core composed of cellulose nanofibers; and a coating layer made of copper, the coating layer being configured to coat the core.

**EP 4 501 497 A1**

**Description**

TECHNICAL FIELD

The present disclosure relates to a novel composite material, and a method for manufacturing the composite material, as well as a spray, a sanitary material, a filter, and a coating agent containing the composite material.

BACKGROUND OF INVENTION

Copper has various functions such as electrical conductivity, thermal conductivity, and antibacterial properties. However, copper is easily oxidized, and when it is oxidized, the above-described functions cannot be exhibited. Therefore, when copper is used, improvement in oxidation resistance is desired. For example, Patent Document 1 discloses surface-coated copper fine particles which are copper fine particles having a specific organic coating film formed on the surface of the copper fine particles. The surface-coated copper fine particles are considered to be excellent in terms of the oxidation resistance of the copper fine particles and excellent in terms of the electrical conductivity of a sintered body obtained. Patent Document 2 describes metal-containing oxidized cellulose nanofibers containing a metal other than sodium in the form of a salt, and the metal-containing oxidized cellulose nanofibers are said to have a high antibacterial effect.

CITATION LIST

PATENT LITERATURE

Patent Document 1: JP 2019-214748 A
Patent Document 2: WO 2019/107195 A

SUMMARY

A composite material of the present disclosure includes a core composed of cellulose nanofibers, and a coating layer made of copper that coats the core.

DESCRIPTION OF EMBODIMENTS

The surface-coated copper fine particles described in Patent Document 1 are excellent in terms of electrical conductivity at the time of sintering, but when the surface-coated copper fine particles are not sintered, the resistance thereof increases due to the organic coating on the surface, so that desired electrical conductivity cannot be obtained. Since the metal-containing oxidized cellulose nanofibers described in Patent Document 2 have a low metal ion concentration, antiviral and antibacterial effects are low, and it is difficult to use the metal-containing oxidized cellulose nanofibers for a long period of time. There is room for improvement in terms of deodorizing effects.
The present disclosure has been made in view of such circumstances, and an object thereof is to provide a novel composite material capable of reducing oxidation of copper and exhibiting functions of copper such as antibacterial properties and electrical conductivity, and a method for manufacturing the composite material.
Hereinafter, the present disclosure will be described in detail with reference to an embodiment.

Composite Material

A composite material of the present disclosure includes a core composed of cellulose nanofibers, and a coating layer made of copper that coats the core.
In the composite material of the present disclosure, oxidation of copper is reduced by coating the core composed of the cellulose nanofibers with the coating layer made of copper, and the functions of copper such as antibacterial properties and electrical conductivity can be exhibited.
The core constituting the composite material is composed of cellulose nanofibers. The cellulose nanofibers refer to fibrous materials having a fiber diameter of 500 nm or less, which are produced by defibrating vegetable fibers to a nano level.
The average fiber diameter of the cellulose nanofibers is not particularly limited, and may be 3 nm or more and 100 nm or less, 3 nm or more and 80 nm or less, 4 nm or more and 60 nm or less, or 4 nm or more and 40 nm or less from the viewpoint of maintaining transparency. The average fiber length of the cellulose nanofibers is not particularly limited, but may be 0.5 μm or more and 100 μm or less, 0.5 μm or more and 50 μm or less, or 0.5 μm or more and 5 μm or less from the viewpoint of handleability.

The average fiber diameter and the average fiber length of the cellulose nanofibers are determined by averaging the fiber diameters and the fiber lengths obtained from the results of observation of each fiber using an atomic force microscope (AFM).

The average aspect ratio of the cellulose nanofibers may be 10 or more, or 50 or more. The upper limit of the average aspect ratio is not particularly limited, but is usually 1000 or less. The average aspect ratio can be calculated by the following formula (1): Aspect ratio = average fiber length/average fiber diameter ... (1)

The raw material of cellulose nanofibers is not particularly limited, and examples thereof include wood; bamboo; hemp; jute; kenaf; agricultural land waste; cloth; and pulp such as softwood unbleached kraft pulp (NUKP), softwood bleached kraft pulp (NBKP), hardwood unbleached kraft pulp (LUKP), hardwood bleached kraft pulp (LBKP), softwood unbleached sulfite pulp (NUSP), softwood bleached sulfite pulp (NBSP), thermomechanical pulp (TMP), recycled pulp, and used paper. One type of the cellulose raw materials may be used, or two or more types may be used in combination.

The cellulose nanofibers may be subjected to a modification treatment. Specific examples of the modification treatment include esterification such as acetylation, phosphorylation, urethanization, carbamidation, etherification, carboxymethylation, TEMPO (2,2,6,6-tetramethylpiperidine-1-oxyl radical) oxidation, and periodate oxidation. The cellulose nanofibers may be subjected to only one of these modification treatments, or may be subjected to two or more of these modification treatments.

As the cellulose nanofibers, commercially available products may be used. Examples of commercially available products of cellulose nanofibers include ELLEX-A (ELLEX-star) (manufactured by Daio Paper Corporation), ELLEX-S (manufactured by Daio Paper Corporation), and CELLENPIA (registered trademark) (manufactured by Nippon Paper Industries Co., Ltd.).

The coating layer coating the core is made of copper. The copper forming the coating layer may be derived from a copper compound such as copper halide, copper carboxylate, or cuprous oxide. Examples of the copper halide include copper iodide, copper bromide, and copper chloride. Examples of the copper carboxylate include copper oxalate and copper acetate.

From the viewpoint of manufacturability, the copper compound may be copper halide, or may be copper chloride.

The coating layer may have a thickness of 1 nm or more and 150 nm or less, 2 nm or more and 120 nm or less, or 3 nm or more and 100 nm or less. When the thickness of the coating layer is 1 nm or more, the functions of copper such as antibacterial properties and electrical conductivity can be further exhibited, and when the thickness of the coating layer is 150 nm or less, oxidation of copper can be reduced.

The thickness of the coating layer can be calculated as an average value obtained by cutting the composite material with a focused ion beam (FIB) to produce a cross-sectional section that is then photographed with a transmission electron microscope (TEM), and measuring the thicknesses at 100,000 to 500,000 points. Specifically, the thickness can be measured by the method described in Examples.

When the composite material of the present disclosure includes plating layer described below, the range of the thickness of the coating layer includes the total thickness of the coating layer made of copper and the plating layer.

The coating layer may coat the entire surface of the core, or may coat a part thereof. The coverage ratio of the coating layer with respect to the core may be 0.5% or more and 99% or less, 1% or more and 99% or less, 5% or more and 99% or less, or 10% or more and 99% or less. When the coverage ratio of the coating layer is 0.5% or more, the functions of copper such as antibacterial properties and electrical conductivity can be further exhibited, and when the coverage ratio of the coating layer is 99% or less, oxidation of copper can be reduced. The coverage ratio of the coating layer can be measured by a thermal decomposition method using an electric furnace or a thermogravimetric/differential thermal analyzer (TG/DTA). Specifically, the coverage ratio can be measured by the method described in Examples.

The composite material of the present disclosure may include a plating layer that coats the coating layer from the viewpoint of further exhibiting the functions of copper such as antibacterial properties and electrical conductivity. Examples of the metal constituting the plating layer include copper, nickel, chromium, cobalt, and tin.

The thickness of the plating layer may be 0.01 μm or more and 0.50 μm or less, may be 0.01 μm or more and 0.20 μm or less, or may be 0.01 μm or more and 0.10 μm or less. When the thickness of the plating layer is 0.01 μm or more, the functions of copper such as antibacterial properties and electrical conductivity can be further exhibited, and when the thickness of the plating layer is 0.50 μm or less, transparency can be maintained.

The thickness of the plating layer can be measured by a fluorescent X-ray analyzer or FIB-TEM (focused ion beam-transmission electron microscope).

Method for Manufacturing Composite Material

The method for manufacturing the composite material according to the present disclosure is a method in which cellulose nanofibers are immersed in a copper particle dispersion.

The copper particle dispersion is obtained by mixing a copper compound, a reducing compound, a water-soluble chloride, and a reducing saccharide in a dispersion medium.

The copper compound is not particularly limited as long as it contains a copper atom. Examples of the copper compound include copper halide, copper carboxylate, and cuprous oxide. Examples of the copper halide include copper iodide, copper bromide, and copper chloride. Examples of the copper carboxylate include copper oxalate and copper acetate. From the viewpoint of manufacturability, the copper compound may be copper halide, or may be copper chloride. The copper compound may be used alone, or two or more copper compounds may be used in combination.

The reducing compound is any compound having a reducing power reducing the copper compound and releasing metallic copper and is not particularly limited. Examples of the reducing compound include: sodium compounds such as sodium borohydride, sodium sulfite, sodium bisulfite, sodium thiosulfate, and sodium hypophosphite; hydrazine compounds such as hydrazine, hydrazine derivatives, hydrazine hydrochloride, and hydrazine sulfate; and organic acids such as oxalic acid and formic acid. From the viewpoint of adjusting the thickness of the coating layer to a desired thickness, the reducing compound may be a sodium compound, or may be sodium borohydride. The reducing compound may be used alone, or two or more reducing compounds may be used in combination.

The amount of the reducing compound may be 1 mol or more and 50 mol or less, 2 mol or more and 40 mol or less, or 2 mol or more and 30 mol or less, with respect to 1 mol of the copper compound, from the viewpoint of adjusting the thickness of the coating layer to a desired thickness.

The water-soluble chloride is used as a colloid stabilizer. Examples of the water-soluble chloride include sodium chloride, potassium chloride, and magnesium chloride. The water-soluble chloride may be sodium chloride. The water-soluble chloride may be used alone, or two or more water-soluble chlorides may be used in combination.

From the viewpoint of the stability of the copper particle dispersion, the amount of the water-soluble chloride may be 2 mol or more and 80 mol or less, 2 mol or more and 60 mol or less, or 2 mol or more and 40 mol or less with respect to 1 mol of the copper compound.

The reducing saccharide is used as a reducing aid. Examples of the reducing saccharide include sucrose, galactose, and fructose. The reducing saccharide may be sucrose. The reducing saccharide may be used alone, or two or more reducing saccharides may be used in combination.

The amount of the reducing saccharide may be 0.5 mol or more and 10 mol or less, 1 mol or more and 5 mol or less, or 1 mol or more and 2 mol or less with respect to 1 mol of the copper compound from the viewpoint of the reducibility of the copper compound.

Examples of the dispersion medium include water and alcohol. Examples of the alcohol include methanol, ethanol, propanol, and butanol.

The amount of dispersion medium may be any amount as long as it enables the copper particles to be dispersed.

The copper particle dispersion can be prepared by adding a copper compound, a reducing compound, a water-soluble chloride, and a reducing saccharide to a dispersion medium, and sufficiently stirring the mixture manually or with a stirrer. The order of mixing the compounds is not particularly limited, but a copper compound, a water-soluble chloride, and a reducing saccharide may be added to a dispersion medium, and a reducing compound may be added to the mixture while stirring the mixture.

The charging rate at the time of adding the reducing compound may be 0.1 g/min or more and 5.0 g/min or less, 0.1 g/min or more and 3.0 g/min or less, or 0.1 g/min or more and 2.0 g/min or less from the viewpoint of adjusting the thickness of the coating layer to a desired thickness.

The solid content concentration in the copper particle dispersion may be 1 mass% or more and 80 mass% or less, 5 mass% or more and 50 mass% or less, or 10 mass% or more and 40 mass% or less, based on the total amount (100 mass%) of the dispersion. When the solid content concentration is 1 mass% or more, the coverage ratio of the coating layer can be adjusted to a desired range, and when the solid content concentration is 80 mass% or less, the dispersibility of the copper particles is secured.

In the present disclosure, the "solid content concentration" refers to the content (concentration) of components other than the dispersion medium.

As the stirrer used in the dispersion treatment for obtaining the copper particle dispersion, various known stirrers can be used. Examples of such devices include a highspeed stirring and mixing apparatus such as a disperser or a homomixer; a kneading machine such as a roll mill, a kneader, or an extruder; a high-pressure disperser such as a high-pressure homogenizer; a media type disperser such as a paint shaker or a bead mill; a mixing and stirring device such as an anchor blade. A plurality of these devices can be used in combination.

The copper particles contained in the copper particle dispersion may have an average particle diameter of 1 nm or more and 150 nm or less, may be 2 nm or more and 130 nm or less, or may be 3 nm or more and 120 nm or less. When the average particle diameter of the copper particles is 1 nm or more, the obtained composite material can exhibit the antibacterial properties, and when the average particle diameter is 150 nm or less, the obtained composite material can further exhibit the functions of copper such as antibacterial properties and electrical conductivity.

The average particle diameter of the copper particles can be measured by a field emission scanning electron microscope (FE-SEM). Specifically, the average particle diameter can be measured by the method described in Examples.

The shape of the copper particles has no particular limitation, and examples thereof include a spherical shape, a plate shape, a flake shape, a scale shape, a dendritic shape, a rod shape, and a wire shape.

Next, the cellulose nanofibers are immersed in the copper particle dispersion. As a result, a composite material including a core composed of cellulose nanofibers, and a coating layer made of copper that coats the core, can be obtained.

The conditions for immersing the cellulose nanofibers in the copper particle dispersion are not particularly limited, but the immersion may be performed at 5°C or more and 60°C or less for 0.1 hours or more and 6 hours or less, at 5°C or more and 40°C or less for 0.1 hours or more and 3 hours or less, or at 10°C or more and 40°C or less for 0.5 hours or more and 2 hours or less. By immersing the cellulose nanofibers in the copper particle dispersion under the above conditions, the coverage ratio of the coating layer can be adjusted to a desired range.

The coverage ratio of the coating layer can be adjusted to a desired range by appropriately adjusting the amount of the cellulose nanofibers to be immersed in the copper particle dispersion.

The cellulose nanofibers may be immersed in an aqueous solution of a cationic surfactant having a quaternary amine group before being immersed in the copper particle dispersion from the viewpoint of adsorptivity of the copper particles. Examples of the cationic surfactant having a quaternary amine group include trimethylstearylammonium chloride and dicocoyldimethylammonium chloride. The cationic surfactant having a quaternary amine group may be trimethylstearylammonium chloride.

The composite material thus obtained may be washed with water or alcohol. Examples of the alcohol used for washing include methanol, ethanol, and propanol.

The coating layer that the composite material includes may be subjected to a plating treatment to form a plating layer on the surface of the coating layer. Electroless plating is used for the plating treatment. The electroless plating is, for example, a method in which an electroless plating solution is brought into contact with the coating layer of the composite material so that a metal contained in the electroless plating solution is precipitated to form a plating layer made of a metal film. The electroless plating solution used in the electroless plating treatment may be a known electroless plating solution, and is not particularly limited. After electroless plating is performed on the coating layer, electrolytic plating may be further performed to form a plating layer. The electrolytic plating treatment can be performed by a known method, and is not particularly limited.

Dispersion

The composite material of the present disclosure may be a dispersion in which the composite material is dispersed. Examples of a dispersion medium for dispersing the composite material include water, an organic solvent, and a resin.

Examples of the organic solvent used for the dispersion medium include ethanol, terpineol, and carbitol acetate. One of the organic solvents may be used alone, or two or more of the organic solvents may be used in combination.

Examples of the resin used for the dispersion medium include a siloxane resin, an epoxy resin, and an acrylic resin. One of the resins may be used alone, or two or more of the resins may be used in a combination.

The dispersion can be prepared by adding the composite material to the dispersion medium and sufficiently stirring the mixture manually or with a stirrer.

The solid content concentration in the dispersion may be 0.1 mass% or more and 50 mass% or less, 0.1 mass% or more and 40 mass% or less, or 0.1 mass% or more and 20 mass% or less, based on the total amount (100 mass%) of the dispersion. When the solid content concentration is 0.1 mass% or more, antibacterial properties can be exhibited, and when the solid content concentration is 50 mass% or less, dispersibility in a dispersion medium can be ensured.

Intended Use

In the composite material of the present disclosure, oxidation of copper is reduced, and the functions of copper such as antibacterial properties and electrical conductivity can be exhibited. Therefore, the composite material of the present disclosure and the dispersion in which the composite material is dispersed are suitable as products including the same, such as sprays; sanitary materials such as masks, diapers, and sanitary goods; transparent conductive materials used for liquid crystal displays, touch panels, solar cells, and the like; filters for air conditioners, air purifiers, and the like; and coating agents for anti-fouling and anti-scratch applications.

EXAMPLE

The present disclosure will be specifically described through examples; however, the present disclosure is not limited in any way to these examples.

Production Example 1

In a reaction vessel in which 1 L of an aqueous solution containing 20 mmol of copper chloride (CuCl$_2$) and 0.1 mol of sodium chloride (NaCl) was charged, 10 g of sucrose was added, and sodium borohydride (NaBH$_4$) was added dropwise at a charging rate of 1 g/min while stirring, to obtain a copper nanocolloid solution that contains copper particles having an average particle diameter of 5 nm and that has a solid content concentration of 1 mass%. Cellulose nanofibers (trade name: ELLEX-* (ELLEX-star), manufactured by Daio Paper Corporation, average fiber diameter: 5 nm, average fiber length: 1 μm) previously washed with an aqueous sodium hydroxide (NaOH) solution of 1M were immersed in an aqueous trimethylstearylammonium chloride solution having a concentration of 1%, then immersed in the copper nanocolloid solution at a temperature of 25°C for 1 hour, and washed with ethanol to obtain a composite material 1. When a cross section of the obtained composite material 1 was observed with a field emission scanning electron microscope (FE-SEM) (JSM-7401F, manufactured by JEOL Ltd.), it was confirmed that a copper layer (coating layer) having a substantially uniform thickness was formed over the entire surface of the cellulose nanofibers in the composite material 1.
In the composite material 1, the coating layer had a coverage ratio of 99%, and a thickness of 5 nm.

Production Example 2

In a reaction vessel in which 1 L of an aqueous solution containing 30 mmol of copper chloride (CuCl$_2$) and 0.1 mol of sodium chloride (NaCl) was charged, 10 g of sucrose was added, and sodium borohydride (NaBH$_4$) was added dropwise at a charging rate of 2 g/min while stirring, to obtain a copper nanocolloid solution containing copper particles having an average particle diameter of 20 nm. The obtained copper nanocolloid solution was diluted with 1 L of water to obtain a copper nanocolloid solution having a solid content concentration of 2 mass%.
Cellulose nanofibers (trade name: ELLEX-* (ELLEX-star), manufactured by Daio Paper Corporation, average fiber diameter: 5 nm, average fiber length: 1 μm) previously washed with an aqueous sodium hydroxide (NaOH) solution of 1M were immersed in an aqueous trimethylstearylammonium chloride solution having a concentration of 1%, then immersed in the copper nanocolloid solution at a temperature of 25°C for 1 hour, and washed with ethanol to obtain a composite material 2 in which a copper layer (coating layer) was formed on the surface of the cellulose nanofibers.
In the composite material 2, the coating layer had a coverage ratio of 50%, and a thickness of 20 nm.

Production Example 3

In a reaction vessel in which 1 L of an aqueous solution containing 50 mmol of copper chloride (CuCl$_2$) and 0.1 mol of sodium chloride (NaCl) was charged, 10 g of sucrose was added, and sodium borohydride (NaBH$_4$) was added dropwise at a charging rate of 2.5 g/min while stirring, to obtain a copper nanocolloid solution containing copper particles having an average particle diameter of 50 nm. The obtained copper nanocolloid solution was diluted with 4 L of water to obtain a copper nanocolloid solution having a solid content concentration of 5 mass%.
Cellulose nanofibers (trade name: ELLEX-* (ELLEX-star), manufactured by Daio Paper Corporation, average fiber diameter: 5 nm, average fiber length: 1 μm) previously washed with an aqueous sodium hydroxide (NaOH) solution of 1M were immersed in an aqueous trimethylstearylammonium chloride solution having a concentration of 1%, then immersed in the copper nanocolloid solution at a temperature of 25°C for 1 hour, and washed with ethanol to obtain a composite material 3 in which a copper layer (coating layer) was formed on the surface of the cellulose nanofibers.
In the composite material 3, the coating layer had a coverage ratio of 20%, and a thickness of 50 nm.

Production Example 4

A composite material 4' in which a copper layer (coating layer) was formed on the surface of cellulose nanofibers was obtained in the same manner as in Production Example 1 except that cellulose nanofibers, trade name: ELLEX-S, manufactured by Daio Paper Corporation, average fiber diameter: 20 nm, average fiber length: 1 μm, were used. The obtained composite material 4' was immersed in an electroless plating solution (OPC-700 electroless copper M-K, manufactured by Okuno Chemical Industries Co., Ltd.) and subjected to an electroless copper plating treatment to obtain a composite material 4 in which a copper plating layer was formed on the surface of the coating layer.
In the composite material 4, the coating layer had a coverage ratio of 99%, and a total thickness of 80 nm in which the copper layer had a thickness of 5 nm and the copper plating layer had a thickness of 75 nm.

Production Example 5

In a reaction vessel in which 1 L of an aqueous solution containing 20 mmol of copper chloride ($CuCl_2$) and 0.1 mol of sodium chloride (NaCl) was charged, 10 g of sucrose was added, and sodium borohydride ($NaBH_4$) was added dropwise at a charging rate of 1 g/min while stirring, to obtain a copper nanocolloid solution containing copper particles having an average particle diameter of 5 nm. The obtained copper nanocolloid solution was diluted with 9 L of water to obtain a copper nanocolloid solution having a solid content concentration of 0.1 mass%.

Cellulose nanofibers (trade name: ELLEX-* (ELLEX-star), manufactured by Daio Paper Corporation, average fiber diameter: 5 nm, average fiber length: 1 $\mu$m) previously washed with an aqueous sodium hydroxide (NaOH) solution of 1M were immersed in an aqueous trimethylstearylammonium chloride solution having a concentration of 1%, then immersed in the copper nanocolloid solution at a temperature of 25°C. for 0.5 hours, and washed with ethanol to obtain a composite material 5 in which a copper layer (coating layer) was formed on the surface of the cellulose nanofibers.

In the composite material 5, the coating layer had a coverage ratio of 10%, and a thickness of 5 nm.

Production Example 6

To a reaction flask, 2 L of 15 M sodium hydroxide (NaOH), 100 mL of 0.2 M copper (II) nitrate ($Cu(NO_3)_2$), 30 mL of ethylenediamine (EDA), and 2.5 mL of a 35 mass% hydrazine aqueous solution were added, and the mixture was stirred and mixed for 20 seconds. The solution was heated to 80°C and stirred at 200 rpm for 60 minutes. After the reaction, the reaction solution was washed with a 3 mass% hydrazine aqueous solution to obtain copper nanowires.

Evaluation Items

Average Particle Diameter of Copper Particles

The dispersion medium was evaporated from the copper nanocolloid solutions obtained in Production Examples 1 to 5 to obtain copper particles.

The average particle diameter of the copper particles was calculated as an average value of 100 copper particles from an image obtained by photographing the copper particles using a field emission scanning electron microscope (FE-SEM) (JSM-7401F, manufactured by JEOL Ltd.).

Shape of Copper (Particles)

The dispersion medium was evaporated from the copper nanocolloid solutions obtained in Production Examples 1 to 5 to obtain copper particles.

The shape of the copper (particles) was confirmed from an image obtained by photographing the copper particles or the copper nanowires obtained in Production Example 6, using a field emission scanning electron microscope (FE-SEM) (JSM-7401F, JEOL Ltd.).

Coverage Ratio of Coating Layer or Ratio of Copper Contained in Copper Nanowires Using a thermogravimetric/differential thermal analyzer (TG/DTA) (TG209F1Libra, manufactured by NETZSCH), 10 mg of the obtained composite material or copper nanowires was heated from 25°C to 600°C at a heating rate of 10°C/min in an argon atmosphere, and held for 60 minutes, and then the mass of the sample was measured. The coverage ratio of the coating layer in the composite material was calculated as a ratio of the mass of the sample after the measurement to the mass of the sample before the measurement. The ratio of copper contained in the copper nanowires was calculated from the ratio of the mass of the sample after measurement to the mass of the sample before measurement.

Thickness of Coating Layer or Diameter of Copper Nanowire The thickness of the coating layer of the composite material, and the diameter of the copper nanowires can be calculated as an average value obtained by cutting the composite material or the copper nanowires with a focused ion beam (FIB) to produce a cross-sectional section which is then photographed with a transmission electron microscope (TEM) at a magnification of 500,000 times, and measuring the thicknesses/diameters at 500,000 points. In Table 1, the thickness of the coating layer of the composite material 4 obtained in Production Example 4 is the total thickness of the copper layer and the copper plating layer.

[Table 1]

Table 1

| | Production Example 1 | Production Example 2 | Production Example 3 | Production Example 4 | Production Example 5 | Production Example 6 |
|---|---|---|---|---|---|---|
| Average fiber diameter of CNF [nm] | 5 | 5 | 5 | 20 | 5 | - |
| Average particle diameter of copper particles [nm] | 5 | 20 | 50 | 100 | 5 | - |
| Shape of copper particle | Spherical | Spherical | Spherical | Spherical | Spherical | Wire |
| Coverage ratio of coating layer, or ratio of copper contained in copper nanowires [%] | 99 | 50 | 20 | 99 | 10 | 100 |
| Thickness of coating layer, or diameter of copper nanowire [nm] | 5 | 20 | 50 | 80 | 5 | 50 |

Examples 1 to 5 and Comparative Examples 1 and 2

The components of the types and amounts shown in Table 2 were mixed to prepare dispersions.
Details of each component described in Table 2 used for preparation of the dispersions are as follows.

- Composite material 1: composite material produced in Production Example 1
- Composite material 2: composite material produced in Production Example 2
- Composite material 3: composite material produced in Production Example 3
- Composite material 4: composite material produced in Production Example 4
- Composite material 5: composite material produced in Production Example 5
- Copper nanowires: copper nanowires prepared in Production Example 6
- Cellulose nanofibers (CNF): ELLEX-A (ELLEX-star) manufactured by Daio Paper Corporation, average fiber diameter 5 nm, average fiber length 1 $\mu$m
- Ethanol (dispersion medium): manufactured by Tokyo Chemical Industry Co., Ltd.

Evaluation Items

Oxidation Degree

The composite material or the copper nanowires were subjected to X-ray diffraction (XRD), and regarding each component of Cu, CuO, and $Cu_2O$, the content of the component was quantified from the integrated intensity ratio of the strongest line peak of the component by an RIR (reference intensity ratio) method. The oxidation degree was calculated by the following formula (1), and evaluated according to the following evaluation criteria.
$$\text{Oxidation degree (\%)} = ([CuO] + [Cu_2O])/([Cu] + [CuO] + [Cu_2O]) \times 100 \dots (1)$$

In the formula (1), [Cu] represents the content (mass%) of copper (Cu) in the composite material or the copper nanowires, [CuO] represents the content (mass%) of copper (II) oxide in the composite material or the copper nanowires, and $[Cu_2O]$ represents the content (mass%) of copper (I) oxide in the composite material or the copper nanowires.

Evaluation Criteria

A: Degree of oxidation is less than 1%
B: Degree of oxidation is 1% or more and less than 3%
C: Degree of oxidation is 3% or more

Antiviral Property

The dispersion was applied on a glass plate and dried to obtain an antiviral product (antiviral-processed glass plate), which was evaluated for an antiviral effect. To a surface of an antiviral-processed glass plate having a size of 5 cm × 5 cm, 100 mL of an influenza A virus solution having a viral infectivity titer of $2 \times 10^4$ PFU/mL was added, and the plate was allowed to stand at 25°C for 2 hours. Thereafter, the virus solution on the surface of the antiviral processed glass plate was recovered, and the number of plaques in the recovered solution was measured to measure the viral infectivity titer. For the influenza A virus solution before standing for 2 hours as well, the viral infectivity titer was also measured. The antiviral effect was determined by these viral infectivity titers. The case where the viral infectivity titer after standing for 2 hours was equal to or less than the detection limit was defined as "++", the case where the antiviral activity value after standing for 2 hours, calculated from the following formula, was decreased by 1 or more was defined as "+", and the case where the viral infectivity titer after standing for 2 hours was "++" and the antiviral activity value after standing for 2 hours was other than "+" was defined as "-".

$$\text{Antiviral activity value} = \log(Vb) - \log(Vc)$$

In the formula, $\log(Vb)$ is the common logarithm value of the viral infectivity titer of the influenza A virus solution before being left to stand for 2 hours, and $\log(Vc)$ is the common logarithm value of the viral infectivity titer of the influenza A virus solution after being left to stand for 2 hours on the surface of the antiviral-processed glass plate.

Antibacterial and Deodorizing Effect

After the dispersion was applied to a sterilized standard cotton cloth, its antibacterial and deodorizing effect was evaluated. The meaning of each evaluation index in Table 2 is as follows.

Antimicrobial Test

The antibacterial test was carried out in accordance with JIS L-1902: 2008 Quantitative Test (bacterial liquid absorption method). The dispersion, 0.9 mL, was added to a sterilized standard cotton cloth, 0.4 g, to form a test sample. The test strains used were Escherichia coli or Staphylococcus aureus. After culturing for 24 hours at room temperature (25°C.), an antibacterial activity value of 2.2 or more (bacterial reduction rate = 99.4% or more) was used as the determination value for effectiveness.

Deodorization Test

Into a 5L Tedlar bag, 3 L of test gas (ammonia gas) was charged and the test cotton cloth to which 1 mL of the dispersion liquid had been added was placed, and a decrease in gas concentration by 90% or more from the initial concentration (= 100 ppm) after 2 hours was defined as a determination value.

Determination Criteria

From the above measurement results, evaluation was performed according to the following criteria.

A: In the antibacterial test, the antibacterial activity value was 2.4 or more, and in the deodorization test, the gas concentration decreased by 96% or more. Thus, a high antibacterial and deodorizing effect was confirmed.
B: In the antibacterial test, the antibacterial activity value was 2.2 or more and less than 2.4, and in the deodorization test, the gas concentration decreased by 90% or more and less than 96%. Thus, an antibacterial and deodorizing effect was confirmed.
C: In the antibacterial test, the antibacterial activity value was less than 2.2, and in the deodorization test, the gas concentration decreased by less than 90%. Thus, an antibacterial effect or a deodorizing effect was not confirmed.

Electrical Conductivity (Surface Resistivity)

The surface resistivity of the composite material, the copper nanowires, or the CNF was measured by a four-terminal method using "Loresta HP MCP-T410" manufactured by Mitsubishi Chemical Analytech Co., Ltd., and evaluated according to the following evaluation criteria.

Evaluation Criteria

A: The surface resistivity was less than 50 S2/sq
B: The surface resistivity was 50 Ω/sq. or more and less than 100 S2/sq
C: The surface resistivity was 100 Ω/sq or more

Transmittance

The dispersion was applied to a glass substrate, and the total light transmittance of the dispersion was measured. For measurement of the total light transmittance, a haze meter "NDH 2000" manufactured by Nippon Denshoku Industries Co., Ltd. was used as a measuring instrument. An uncoated glass substrate was used as a reference sample for measuring optical properties, and the optical properties of only the coated film were measured.

[Table 2]

Table 2

| | | Ex. 1 | Ex. 2 | Ex. 3 | Ex. 4 | Ex. 5 | Comp. Ex. 1 | Comp. Ex. 2 |
|---|---|---|---|---|---|---|---|---|
| DISPERSION | Composite material 1 (mass%) | 5 | - | - | - | - | - | - |
| | Composite material 2 (mass%) | - | 5 | - | - | - | - | - |
| | Composite material 3 (mass%) | - | - | 5 | - | - | - | - |
| | Composite material 4 (mass%) | - | - | - | 5 | - | - | - |
| | Composite material 5 (mass%) | - | - | - | - | 5 | - | - |
| | Copper nanowires (mass%) | - | - | - | - | - | - | 5 |
| | CNF (mass%) | - | - | - | - | - | 5 | - |
| | Dispersion medium (mass%) | 95 | 95 | 95 | 95 | 95 | 95 | 95 |
| EVALUATION | Oxidation degree | A | A | A | A | A | -*1 | C |
| | Antiviral property | ++ | ++ | ++ | ++ | + | - | - |
| | Antibacterial and deodorizing effect | A | A | A | A | B | C | C |
| | Electrical conductivity (surface resistivity) | A | A | A | A | A | C | C |
| | Transmittance (%) | 99 | 99 | 99 | 99 | 99 | 99 | 99 |
| * 1: Unevaluated | | | | | | | | |

It can be seen that in Examples 1 to 5 using the dispersion containing the composite material of the present disclosure, the oxidation of copper is low, and the evaluations of the antiviral property, the antibacterial and deodorizing effect, the electrical conductivity, and the transmittance are good.

**Claims**

1. A composite material comprising:

   a core composed of cellulose nanofibers; and
   a coating layer made of copper, the coating layer being configured to coat the core.

2. The composite material according to claim 1, wherein
   the coating layer has a thickness of 1 nm or more and 150 nm or less.

3. The composite material according to claim 1 or 2, wherein
   the coating layer has a coverage ratio of 0.5% or more and 99% or less with respect to the core.

4. The composite material according to any one of claims 1 to 3, wherein
   the cellulose nanofibers have an average fiber diameter of 3 nm or more and 100 nm or less.

5. The composite material according to any one of claims 1 to 4, further comprising:
   a plating layer configured to coat the coating layer.

6. A dispersion in which the composite material according to any one of claims 1 to 5 is dispersed.

7. A spray comprising:
   the composite material according to any one of claims 1 to 5 or the dispersion according to claim 6.

8. A sanitary material comprising:
   the composite material according to any one of claims 1 to 5 or the dispersion according to claim 6.

9. A filter comprising:
   the composite material according to any one of claims 1 to 5 or the dispersion according to claim 6.

10. A coating agent comprising:
    the composite material according to any one of claims 1 to 5 or the dispersion according to claim 6.

11. A method for manufacturing the composite material according to any one of claims 1 to 5, the method comprising:
    immersing the cellulose nanofibers in a copper particle dispersion.

12. The method for manufacturing the composite material according to claim 11, wherein
    copper particles contained in the copper particle dispersion have an average particle diameter of 1 nm or more and
    150 nm or less.

## INTERNATIONAL SEARCH REPORT

| International application No. |
| --- |
| **PCT/JP2023/012121** |

### A. CLASSIFICATION OF SUBJECT MATTER

***B22F 1/18***(2022.01)i; ***B22F 9/00***(2006.01)i; ***B82Y 30/00***(2011.01)i; ***B82Y 40/00***(2011.01)i
FI:   B22F1/18; B22F9/00 B; B82Y30/00; B82Y40/00

According to International Patent Classification (IPC) or to both national classification and IPC

### B. FIELDS SEARCHED

Minimum documentation searched (classification system followed by classification symbols)

B22F1/18; B22F9/00; B82Y30/00; B82Y40/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2018/003357 A1 (FUJIFILM CORPORATION) 04 January 2018 (2018-01-04)<br>  paragraphs [0002]-[0087] | 1-4, 6-12 |
| Y |  | 2, 5-10 |
| X | WO 2010/095574 A1 (KYUSHU UNIVERSITY, NATIONAL UNIVERSITY<br>CORPORATION) 26 August 2010 (2010-08-26)<br>  paragraphs [0014]-[0065] | 1-4, 6-10 |
| Y |  | 2, 5-10 |
| X | JP 2018-154921 A (UNIV OSAKA PREFECTURE) 04 October 2018 (2018-10-04)<br>  claims 1-14, paragraphs [0018], [0042] | 1-12 |
| Y |  | 2, 5-10 |
| Y | JP 2014-55323 A (TOPPAN PRINTING CO LTD) 27 March 2014 (2014-03-27)<br>  claims 1-6, paragraphs [0025], [0042] | 2, 6-10 |
| Y | JP 2018-76521 A (TOPPAN PRINTING CO LTD) 17 May 2018 (2018-05-17)<br>  paragraphs [0012], [0028] | 6-10 |

☐ Further documents are listed in the continuation of Box C.       ☑ See patent family annex.

| | |
| --- | --- |
| *      Special categories of cited documents:<br>"A"   document defining the general state of the art which is not considered<br>        to be of particular relevance<br>"E"   earlier application or patent but published on or after the international<br>        filing date<br>"L"   document which may throw doubts on priority claim(s) or which is<br>        cited to establish the publication date of another citation or other<br>        special reason (as specified)<br>"O"   document referring to an oral disclosure, use, exhibition or other<br>        means<br>"P"   document published prior to the international filing date but later than<br>        the priority date claimed | "T"   later document published after the international filing date or priority<br>        date and not in conflict with the application but cited to understand the<br>        principle or theory underlying the invention<br>"X"   document of particular relevance; the claimed invention cannot be<br>        considered novel or cannot be considered to involve an inventive step<br>        when the document is taken alone<br>"Y"   document of particular relevance; the claimed invention cannot be<br>        considered to involve an inventive step when the document is<br>        combined with one or more other such documents, such combination<br>        being obvious to a person skilled in the art<br>"&"   document member of the same patent family |

| Date of the actual completion of the international search | Date of mailing of the international search report |
| --- | --- |
| **22 May 2023** | **06 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/012121**

| Patent document<br>cited in search report | | | Publication date<br>(day/month/year) | Patent family member(s) | | | Publication date<br>(day/month/year) |
|---|---|---|---|---|---|---|---|
| WO | 2018/003357 | A1 | 04 January 2018 | US 2019/0071819 A1<br>paragraphs [0003]-[0240]<br>KR 10-2018-0123160 A<br>CN 109072538 A | | | |
| WO | 2010/095574 | A1 | 26 August 2010 | (Family: none) | | | |
| JP | 2018-154921 | A | 04 October 2018 | (Family: none) | | | |
| JP | 2014-55323 | A | 27 March 2014 | (Family: none) | | | |
| JP | 2018-76521 | A | 17 May 2018 | JP 2014-70158 A | | | |

Form PCT/ISA/210 (patent family annex) (January 2015)

**REFERENCES CITED IN THE DESCRIPTION**

**Patent documents cited in the description**

- JP 2019214748 A

- WO 2019107195 A